# EUROPEAN PATENT SPECIFICATION

(11) **EP 1 269 167 B1**
(45) Date of publication and mention of the grant of the patent: **28.03.2007**
(21) Application number: 01915521.7
(22) Date of filing: 28.03.2001
(51) Int. Cl.: G01N 25/72

(54) **MONITORING OF RESISTANCE WELDING**
KONTROLLSYSTEM FÜR WIDERSTANDSSCHWEISSUNG
SURVEILLANCE DU SOUDAGE PAR RESISTANCE

(30) Priority: 29.03.2000 GB 0007479
(43) Date of publication of application: 02.01.2003
(73) Proprietor: Ford Global Technologies, LLC, Dearborn, MI 48126 (US); University of East London, Dagenham, Essex RM8 2AS (GB)
(72) Inventor: WEERASINGHE, Vijitha Maithri, London SE18 3BY (GB); HAMEED, Sharif Abdul, Newbury Park, Essex (GB)
(74) Representative: Messulam, Alec Moses
(86) International application number: PCT/GB2001/001373
(87) International publication number: WO 2001/073416

(56) References cited:
- DE-A- 2 230 485
- DE-C- 19 740 024
- US-A- 3 191 441
- US-A- 4 168 430
- US-A- 4 214 164
- US-A- 5 968 376

## Description

### Field of the invention

This invention relates to a method and apparatus for monitoring resistance welds and enables simple, low cost predictive indications of welding electrode deterioration.

### Background of the invention

Spot welding processes are used widely for forming a strong permanent connection between overlying portions of sheet metal members. A typical application in the automotive industry is the welding of a spider (hub) to a wheel rim to form a sheet metal road wheel. It is common for such applications to check the quality of the welds by destructive test every hour of operation. If the welds are not up to specification, the previous hours production is quarantined and each wheel is manually checked for weld nugget size and integrity. This is wasteful since many wheels may have to be scrapped. A system for monitoring the quality of each weld so that corrective measures can be taken before out of specification wheels are produced would clearly be desirable.

Deterioration of weld quality is usually caused by wear and eventual "mushrooming" of the copper electrodes where they contact the workpiece during a welding operation. The number of welds which may be made with a set of electrodes before replacement is necessary varies quite considerably so that replacement after a fixed number of welds is not a fully effective solution.

Various optical methods have previously been proposed for weld quality monitoring. US-4,767,911 discloses for example real-time determination of weld quality in which a collimated light source directs a beam of collimated light to a point on the weld pool surface. A position sensor measures the direction of the light after it is reflected from the weld pool surface 24. This measurement is then analysed electronically to determine changes in angles of the weld pool surface for real-time indication of the state of penetration of the weld pool.

In JP 60247483 and JP 7063694 image processing is used to determine the boundaries of the weld spot and then to analyse the dimensions of the weld spot.

Methods and apparatus for monitoring the welds produced by a spot welding machine are also described in DE 19740024, US 4168430 and DE 2230485. In the following claims a specific recognition of the teaching of DE 19740024 is provided in the preamble of the independent method claim and a specific recognition of the teaching of USP 4168430 is provided in the preamble of the independent apparatus claim.

In JP 3248780 image analysis is used to determine the diameter of the tip of the welding electrodes and this is used in defining an optimum current density and electrode pressure.

All the above proposals relying on image analysis, are costly and complex to implement as they require a camera that can examine several picture elements in order to be ascertain the diameter of the weld spot or the electrode, as the case may be. Furthermore, a programmed computer is required to perform the image analysis.

GB 2073443 proposes using infrared sensing to determine weld temperature, the disclosed sensor comprising a bundle of optical fibres located within the welding tip. In this case, modification is required to the welding apparatus which is undesirable.

### Object of the invention

The present invention seeks to provide a simple and robust form of resistance weld monitoring that can be performed without interfering with the welding equipment.

### Summary of the invention

In accordance with a first aspect of the invention, there is provided a method of monitoring the welds produced by a spot welding machine and producing a value indicative of the condition of the welding electrode, as hereinafter set forth in Claim 1 of the appended claims.

The method of the invention differs from prior art that relies on image analysis because no attempt is made in the present invention to ascertain the diameter of the weld spot and instead the intensity (and preferably also the rate of decay) of the radiation emitted by the weld spot is analysed to evaluate the size of the weld nugget. Hence, the invention allows the use of a simpler transducer which may consist of a single sensor, such as a photodiode.

The invention differs from GB 2073443, in that the weld spot is monitored after completion of the welding process rather than during the welding process and in that no modification is required to the welding electrodes.

According to a second aspect of the invention, there is provided an apparatus for monitoring the quality of the welds produced by a spot welding machine and generating a signal indicative of the condition of the welding electrode as hereinafter set forth in Claim 4 of the appended claims.

The transducer preferably consists of a single photosensitive element, such as a photodiode.

### Brief description of the drawings

The invention will now be described further, by way of example, with reference to the accompanying drawings, in which:
Figure 1 is diagram of a wheel welding apparatus with a quality monitoring system embodying the invention;
Figure 2 is a graph of the output of the photodiode of the monitoring system shown in Figure 1 for a good quality weld;
Figure 3 is a graph similar to Figure 2 but for a weld of marginal acceptability made with worn electrodes; and
Figure 4 is a graph similar to Figure 2 but for a reject weld made with heavily mushroomed electrodes.

### Detailed description of the drawings

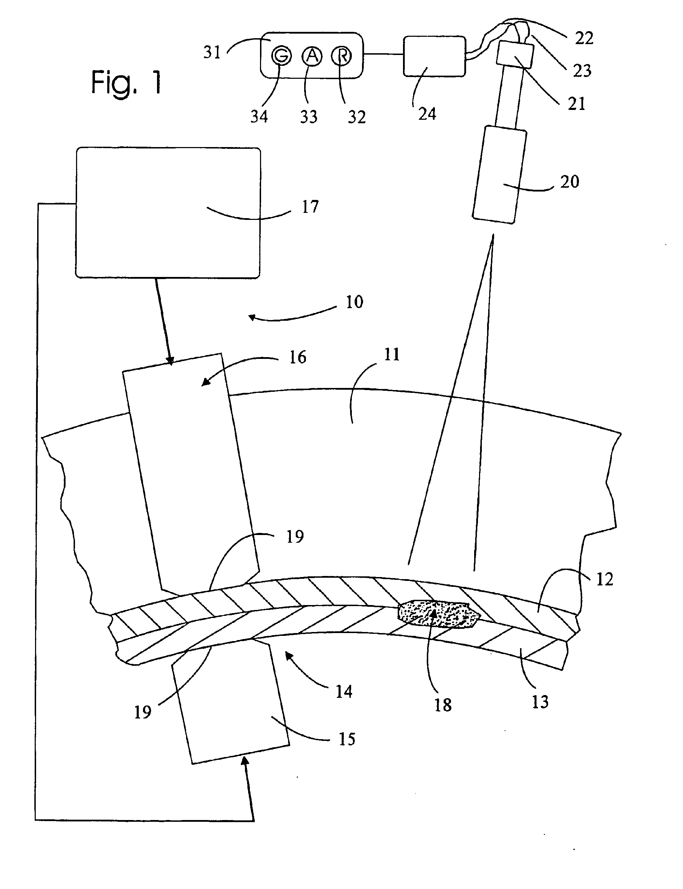

In Figure 1, an apparatus 10 for welding vehicle road wheels 11 comprises a mounting jig (not shown) for supporting a wheel rim 12 and wheel spider 13 in correct position for assembly. Four identical welding stations (of which one is shown at 14 in Figure 1) each comprise an inner welding electrode 15 and an outer welding electrode 16. Conventional spot welding equipment 17 is arranged to apply pressure and a welding current between the inner and outer electrodes when required.

The wheel welding process involves mounting the rim 12 and spider 13 in the jig and rotating the wheel assembly to a first position (not shown) at which a set of four spot welds is formed. The wheel is then indexed to a second position and brought to a stop so that a second set of welds weld may be formed. One of the welds of the first set is shown at 18 in Figure 1. This figure shows the wheel in the second position, immediately prior to formation of the second set of welds which will complete the welding process. As thus far described the process is entirely conventional.

The process is used for mass production of wheel and it is required that the process operate substantially without operator intervention over long periods. Conventionally, wheels are taken for destructive testing of weld integrity at fixed intervals, for example once every hour of operation. If the weld tested is within the specification, production continues. If not the previous hour of production is quarantined for 100% visual checking and most of such production is scrapped.

The usual cause of below specification welds is electrode wear. The electrodes are of copper and pressure and heat eventually causes wear and "mushrooming". Mushrooming is the name given to a condition in which the working ends 19 of the electrodes spread out and burr over to a mushroom shape. This causes both clamping force and current to be spread out over a greater area so that the temperature achieved at the weld site goes below what is needed to achieve a good weld, a good weld being determined by a critical weld nugget size.

In the present invention, a telescope 20 is used to focus an image of at least a region of the previously formed weld 18 onto a large area photo-diode 21. In mass production, the time between completion of the welding process and the arrival of the weld 18 in the field of view of the telescope 20 will be substantially constant and the temperature of the weld spot 18 (and its cooling rate) at the time that it is viewed will be directly related to the temperature reached during the welding process. The glowing of the welding spot is used in the present invention to assess the welding temperature and to determine if the weld spot is within the prescribed specification.

The telescope 20 is fixed in position and may be located several metres from the weld area. Consequently, the monitoring apparatus does not interfere with the welding process and requires no modification of the welding machine.

The image of the glow of the weld spot causes an increase in the output signal of the diode 21 on lines 22, 23. The output of the diode 21 is supplied to a computer control unit (CCU) 24. The CCU monitors peak signal level and decay time of the diode output and stores information about each weld that passes through the field of view of the telescope. The output from the diode at a given instant depends on the intensity and the wavelength distribution of the radiation emitted by the weld spot and the diode response characteristic to the wavelength distribution. The intensity and the wavelength distribution emitted by the weld spot will change with time as the weld cools.

During wheel production a succession of welds is produced at each of the four stations and every second weld from each station is monitored. Arrangements may be made to monitor every weld but this is not considered necessary since electrode wear is a gradual process and single welds are not subject to isolated quality problems.

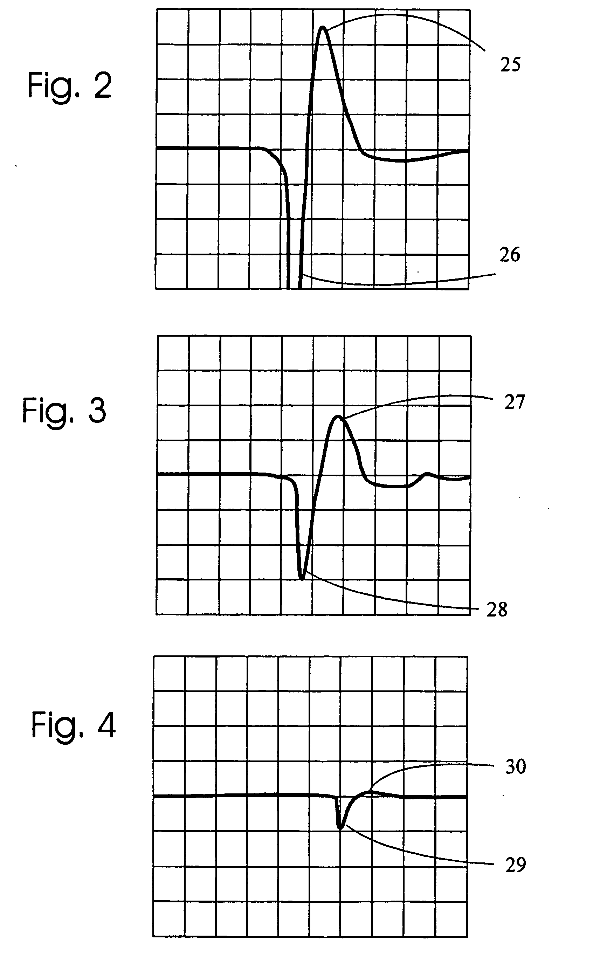

Typical diode output signals are shown in Figures 2, 3 and 4 for electrodes with varying levels of degradation. The key aspects of these signals which relate to electrode degradation are the negative peak amplitude, the positive peak amplitude and the rate of change from the negative peak to the positive peak. The rate of change of the signal from zero to the negative peak amplitude corresponds to the weld image coming into full field of view of the telescope as the weld is indexed and as might be expected, this is seen to be independent of the level of degradation of the electrode.

Once the image of the weld has come to a stop within the field of view of the telescope, the rate of change of the signal from the negative peak to the positive peak corresponds to the decay of the visible glow of the weld (as a result of cooling) and is seen to be indicative of the level of degradation of the electrode.

In Figure 2 new electrodes produce a strong diode output with a positive peak of about 3.5 units shown at 25 preceded by a strong negative excursion 26 which extends beyond scale.

As the electrodes wear, both positive and the negative peak amplitudes decline as shown at 27 and 28 respectively in Figure 3.

For severely mushroomed electrodes the diode output, as shown in Figure 4, has a small negative excursion 29 and a negligible positive peak 30 indicating that the temperature achieved is not sufficient to produce a good weld.

Destructive tests have conclusively established a reliable correlation between the diode signal and the weld nugget size.

As the electrode tip mushrooms, the welding energy is spread over a larger area and at the same time as the welding temperature drops the weld nugget size decreases. The CCU 24 can thus evaluates a weld nugget size indicator value using an algorithm based on the aforementioned diode signal characteristics. While the peak amplitudes are themselves indicative of the weld size, spurious transients can affect the reliability of measurements which rely alone on the peak values alone. By also taking the rate of change of the signal, it is possible to obtain a value which is more accurately and consistently representative of the weld nugget size.

It is not essential, as earlier mentioned to monitor each and every weld spot. It is more important to monitor the trend and to stop the welding process before welds of poor size are produced. In the preferred embodiment of the invention, the computer can perform a statistical analysis of the measurements to obtain such information as the mean and standard deviation of the signals.

The computer 24 is connected to a visual indicator module 31 with red, amber and green warning lights 32, 33 and 34. The green light is lit when the weld size indicator value is consistently high. Amber may be lit to indicate that the size indicator value is approaching or hovering about its minimum permissible value, thereby warning that the electrode tips require attention to avoid the production of unsatisfactory welds. The red light could be used to indicate that the value is dropping below the acceptable level and the welding process should be stopped immediately.

The variance or standard deviation of the measurements can also be used to provide a warning indication of inconsistent weld size or of a possible problem in the monitoring apparatus.

It will be appreciated that the simple weld monitor described does not depend on complex processing of the image to produce a result and due to its simplicity is robust and low cost. No modification of the welding apparatus is needed since the optics enable the monitor to be mounted some distance away from the weld site.

## Claims

1. A method of monitoring the welds produced by a spot welding machine and producing a value indicative of the condition of the welding electrode, which comprises optically imaging a region of a weld spot onto a transducer after completion of the spot welding process, producing by the transducer an electrical signal having a value dependent on the mean intensity and the wavelength distribution of the radiation emitted from the region of the weld spot imaged on to the transducer, and analysing the electrical signal produced by the transducer to evaluate a weld nugget size indicator value, **characterised in that** a value indicative of the condition of the welding electrode is generated from the weld nugget size indicator value, and the analysing step comprises measuring the rate of change with time of the amplitude of the electrical signal as a result of the cooling of the weld spot.

2. A method as claimed in claim 1, and for use in an automated spot welding process, which comprises statistically analysing the electrical signals produced by the transducer from images of different spot welds and providing a poor quality warning when the weld nugget size, as evaluated 1:170M the rate of decay of the transducer output signal is consistently at or near a minimum threshold value.

3. A method as claimed in claim 2, which further comprises producing an alarm signal when the weld nugget size, as evaluated from the rate of decay of the transducer output signal, is consistently below the minimum threshold value.

4. Apparatus for monitoring the quality of the welds produced by a spot welding machine and generating a signal indicative of the condition of the welding electrode, comprising a radiation sensitive transducer, and an optical imaging system for imaging a region of a weld spot onto the transducer after completion of the spot welding process, the transducer being operative to produce an electrical signal having a value proportional to the mean intensity of the radiation emitted from the region of the weld spot imaged on to the transducer, **characterised by** means for analysing the electrical output signal of the transducer to evaluate a weld nugget size indicator value and generating a value indicative of the condition of the welding electrode from the weld nugget size indicator value, and the transducer being sensitive to visible light emitted by the weld spot.

5. Apparatus as claimed in claim 4, wherein the analysing means comprise means for measuring the rate of change with time of the amplitude of the electrical signal as 01 result of the cooling of the weld spot.

6. Apparatus as claimed in claim 4 or 5, for use in an automated spot welding process which comprises means for statistically analysing the electrical signals produced by the transducer from images of different spat welds and providing a poor quality warning when the temperature of the weld spots, as evaluated from the peak amplitude and/or the rate of decay of the transducer output signal, is consistently at or near a minimum threshold value.

7. Apparatus as claimed in claim 6, in which the analysing means further comprises means for producing an alarm signal when the weld nugget size, as evaluated from the peak amplitude and/or the rate of decay of the transducer output signal, is consistently below the minimum threshold value.

## Patentansprüche

1. Verfahren zum Überwachen der von einer Punktschweißmaschine hergestellten Schweißungen und Erzeugen eines Werts, der den Zustand der Schweißelektrode angibt, welches nach Abschluss des Punktschweißvorgangs das optische Abbilden eines Bereichs einer Schweißstelle auf einen Signalgeber oder Messwandler, wobei der Signalgeber ein elektrisches Signal erzeugt, dessen Wert von der durchschnittlichen Intensität und der Wellenlängenverteilung der von dem auf den Signalgeber abgebildeten Bereich der Schweißstelle abgegebenen Strahlung abhängt, und das Analysieren des von dem Signalgeber erzeugten elektrischen Signals zur Auswertung eines die Schweißlinsengröße angebenden Werts umfasst, **dadurch gekennzeichnet, dass** der Wert, der den Zustand der Schweißelektrode angibt, aus dem die Schweißlinsengröße angebenden Wert erzeugt wird und der Analyseschritt das Messen der zeitlichen Änderungsrate der Amplitude des elektrischen Signals als Folge des Abkühlens der Schweißstelle umfasst.

2. Verfahren nach Anspruch 1 und zur Verwendung in einem automatisierten Punktschweißvorgang, welches das statistische Analysieren des elektrischen Signals, welches von dem Signalgeber aus Abbildungen verschiedener Schweißstellen erzeugt wird, und das Bereitstellen einer Warnung bei schlechter Qualität umfasst, wenn die Schweißlinsengröße, die als 1:170 M der Abklingrate des Ausgangssignals des Signalgebers ausgewertet wird, sich durchgängig bei oder nahe einem Mindestschwellwert befindet.

3. Verfahren nach Anspruch 2, welches ferner das Erzeugen eines Alarmsignal umfasst, wenn die Schweißlinsengröße, die aus der Abklingrate des Ausgangssignals des Signalgebers ausgewertet wird, sich durchgängig unterhalb eines Mindestschwellwerts befindet.

4. Vorrichtung zum Überwachen der Qualität der von einer Punktschweißmaschine hergestellten Schweißungen und Erzeugen eines Signals, das den Zustand der Schweißelektrode angibt, umfassend einen für Strahlung empfindlichen Signalgeber oder Messwandler und ein optisches Abbildungssystem zum Abbilden eines Bereichs einer Schweißstelle auf den Signalgeber nach Abschluss des Punktschweißvorgangs, wobei der Signalgeber betriebsfähig ist, um ein elektrisches Signal zu erzeugen, welches einen Wert aufweist, der proportional zu der durchschnittlichen Intensität der von dem auf den Signalgeber abgebildeten Bereich der Schweißstelle abgegebenen Strahlung ist, **gekennzeichnet durch** Mittel zum Analysieren des elektrischen Ausgangssignals des Signalgebers zum Auswerten eines die Schweißlinsengröße angebenden Werts und Erzeugen, aus dem die Schweißlinsengröße angebenden Werts, eines den Zustand der Schweißelektrode angebenden Werts, wobei der Signalgeber für von der Schweißsstelle abgegebenes sichtbares Licht empfindlich ist.

5. Vorrichtung nach Anspruch 4, wobei die Analysemittel Mittel zum Messen der zeitlichen Änderungsrate der Amplitude des elektrischen Signals als Ergebnis des Abkühlens der Schweißstelle umfassen.

6. Vorrichtung nach Anspruch 4 oder 5 zur Verwendung in einem automatisierten Punktschweißvorgang, welche Mittel zum statistischen Analysieren der elektrischen Signale, die von dem Signalgeber aus Abbildungen verschiedener Punktschweißungen erzeugt werden, und das Bereitstellen einer Warnung bei schlechter Qualität umfasst, wenn die Temperatur der Schweißstellen, die aus der Amplitudenspitze und/oder der Abklingrate des Ausgangssignals des Signalgebers ausgewertet wird, sich durchgängig bei oder nahe einem Mindestschwellwert befindet.

7. Vorrichtung nach Anspruch 6, bei der die Analysemittel ferner Mittel zum Erzeugen eines Alarmsignals umfassen, wenn die Temperatur der Schweißstellen, die aus der Amplitudenspitze und/oder der Abklingrate des Ausgangssignals des Signalgebers ausgewertet wird, sich durchgängig unterhalb eines Mindestschwellwerts befindet.

## Revendications

1. Un procédé pour surveiller les soudures produites par une machine à souder par points et pour produire une valeur indicative de l'état de l'électrode de soudage, qui comprend les étapes consistant à produire une image numérique d'une région d'un point de soudure sur un transducteur après avoir achevé le procédé de soudage par points, produire au moyen du transducteur un signal électrique qui possède une valeur dépendant de l'intensité moyenne ainsi que de la distribution des longueurs d'ondes de la radiation émise à partir de la région du point de soudure, dont l'image numérique est produite sur le transducteur, et analyser le signal électrique produit par le transducteur afin d'évaluer une valeur indicatrice de taille de noyau de soudure, **caractérisé en ce qu'**une valeur indicative de l'état de l'électrode de soudage est produite à partir de la valeur indicatrice de taille du noyau de soudure, et l'étape d'analyse comprend l'étape consistant à mesurer le taux de variation de l'amplitude du signal électrique comme résultat du refroidissement du point de soudure au cours d'une période de temps.

2. Un procédé selon la revendication 1, et pour utilisation dans un procédé de soudage par points automatisé, qui comprend les étapes consistant à analyser statistiquement les signaux électriques produits par le transducteur à partir d'images de différents points de soudure, et fournir un avertissement au sujet d'une qualité médiocre lorsque la taille de noyau de soudure, évaluée comme 1 : 170 M le taux de dégradation ou de décroissance du signal en sortie du transducteur, se situe constamment au niveau, ou à proximité du niveau, d'une valeur de limite minimale.

3. Un procédé selon la revendication 2, comprenant en outre l'étape consistant à produire un signal d'alarme lorsque la taille du noyau de soudure, telle qu'évaluée à partir du taux de dégradation du signal en sortie du transducteur, se situe constamment au - dessous de la valeur de limite minimale.

4. Un appareil pour surveiller la qualité des soudures produites par une machine à souder par points et pour produire une valeur indicative de l'état de l'électrode de soudage, comprenant un transducteur sensible aux radiations et un système optique de production d'images numériques pour produire une image numérique d'une région d'un point de soudure sur le transducteur après avoir achevé le procédé de soudage par points, le transducteur étant opératoire pour produire un signal électrique possédant une valeur proportionnelle à l'intensité moyenne de la radiation émise à partir de la région du point de soudure, dont l'image numérique est produite sur le transducteur, **caractérisé par** des moyens pour analyser le signal électrique en sortie du transducteur, afin d'évaluer une valeur indicatrice de taille de noyau de soudure et de produire une valeur indicative de l'état de l'électrode de soudage à partir de la valeur indicatrice de taille de noyau de soudure, et le transducteur étant sensible à la lumière visible émise par le point de soudure.

5. Un appareil selon la revendication 4, dans lequel les moyens d'analyse comprennent des moyens pour mesurer le taux de variation de l'amplitude du signal électrique en résultat du refroidissement du point de soudure au cours d'une période de temps.

6. Un appareil selon la revendication 4 ou 5, pour utilisation dans un procédé de soudage par points automatisé, qui comprend des moyens pour analyser statistiquement les signaux électriques produits par le transducteur à partir d'images de différents points de soudage et pour fournir un avertissement au sujet d'une qualité médiocre lorsque la température des points de soudage, telle qu'évaluée à partir de l'amplitude de crête et/ou à partir du taux de dégradation du signal en sortie du transducteur, se situe constamment au niveau, ou à proximité du niveau, d'une valeur de limite minimale.

7. Un appareil selon la revendication 6, dans lequel les moyens d'analyse comprennent en outre des moyens pour produire un signal d'alarme lorsque la taille de noyau de soudure, telle qu'évaluée à partir de l'amplitude de crête et/ou à partir du taux de dégradation du signal en sortie du transducteur, se situe constamment au - dessous de la valeur de limite minimale.
